# EUROPEAN PATENT SPECIFICATION

(11) **EP 3 097 825 B1**
(45) Date of publication and mention of the grant of the patent: **19.06.2019**
(21) Application number: 16160100.0
(22) Date of filing: 14.03.2016
(51) Int. Cl.: A47J 27/04, A47J 36/08

(54) **RECEPTACLE FOR FOOD PRODUCT TO BE COOKED, PREFERABLY BY MEANS OF STEAM**
GEFAESS ZUM KOCHEN EINES PRODUKTS, VORZUGSWEISE MITTELS DAMPF
RÉCIPIENT POUR LA CUISSON D´UN PRODUIT, DE PRÉFÉRENCE AVEC DE LA VAPEUR

(30) Priority: 27.05.2015 SI 201500133
(43) Date of publication of application: 30.11.2016
(73) Proprietor: Gorenje Gospodinjski aparati d.d., 3503 Velenje (SI)
(72) Inventor: KRECA, Marko, 3312 Prebold (SI); DJUKIC, Drazen, 3000 Celje (SI); KRAJNC, Tomaz, 2382 Mislinja (SI)
(74) Representative: Ivancic, Bojan

(56) References cited:
- US-A- 1 922 419
- US-A- 4 462 308
- US-A- 4 649 811
- US-A- 5 320 028

## Description

The present invention refers to a receiving device for a cooking product to be treated by heat, preferably by means of steam, comprising a container with a base in which a receptacle for a cooking product to be treated by heat is arranged in said container spaced from said base, and a cover of said container.

A receiving device has been disclosed in a publication of a patent applications No. DE 10 2012 102 677 A1 comprising a container with a base and a wall surrounding the base, where the container has a bearing unit at an inner surface. A cooking product carrier is superposable such that it is fully received in the container, and a minimum distance is ensured by means of said carrier between the base surface of the container and the lower side of the cooking product carrier. Furthermore, said know solution provides for that both the container and the cooking product receptacle are covered by a single cover, resulting in the liquid originating during heat treatment of the cooking product condenses and drops onto the cooking product which is rather unwanted effect during heat treatment by means of steam.

Additional receiving device of the aforementioned kind has been disclosed in the publication No. US 4 462 308 A. Said document teaches the treatment of the food by steam whereby food loaded into an essentially imperforate cooking pot enclosed within a top access steam chamber is cooked by steam generated in the chamber and transferred through the pot walls into the food.

US 1 922 419 discloses a spacer to be put in a cooking vessel for supporting a food product to be cooked in steam.

US 5 320 028 discloses a steam cooking vessel, wherein the receptacle has a groove for receiving a liquid at its top end and wherein the lid has a skirt which cooperates with said groove. Yet another receiving device has been disclosed in the publication No. US 4 649 811 A. Said document teaches the use of an outer shell with an open top and an open bottom to enclose the receptacle with the food to be treated. The open bottom is sized to directly fit about a heating element. The disclosed solution is rather intricate and comprises multiple constituent parts in order to achieve treating the food in a sous-vide manner.

It is the object of the present invention to create a receiving device for a cooking product to be treated by heat, preferably by means of steam, which remedies the above mentioned drawbacks.

According to the present invention, the object as set above is solved by features set forth in a characterizing part of claim 1. Detail of the invention is discloses in relevant subclaims.

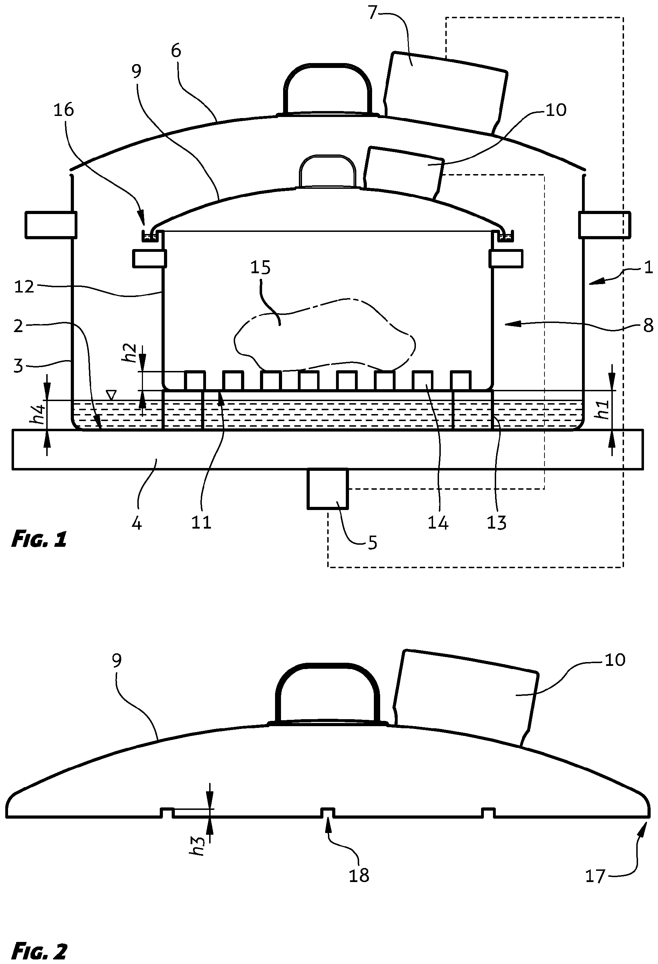

The invention is further described in detail by way of non-limiting embodiment, and with a reference to the accompanying drawing, where
Fig. 1 shows a schematic view of a receiving device according to the invention,
Fig. 2 shows a schematic view of a cover of the device of Fig. 1.

Receiving device according to the invention comprises a container 1 having a base 2 and a wall 3 surrounding said base. Heat is delivered to said container 1 through the base 2 by means of a heating device 4 which is controlled by means of a first control unit 5 such as a temperature sensor for instance. Said container 1 is closed with a first cover 6, the latter being optionally provided with a second control unit 7 such as a temperature sensor for instance. Furthermore, said receiving device according to the invention comprises a receptacle 8 for a cooking product to be treated by heat which is closed with a second cover 9, the latter being optionally provided with a third control unit 10 such as a temperature sensor for instance. Said control units 5, 7, 10 are preferably linked to each other by means of a data and/or signal links.

Said receptacle 8 for a cooking product to be treated by heat comprises a base 11 and a wall 12 surrounding said base 11. Said base 11 of the receptacle 8 is provided at its outer side with at least one outer spacer 13 comprising a height h₁ by means of which there is enabled a constant distance of the receptacle 8 from the base 2 of the container 1, when the receptacle 8 is received within the container 1. Furthermore, said base 11 of the receptacle 8 is provided at its inner side, i.e. inside the receptacle 8, with at least one inner spacer 14, preferably with a plurality of inner spacers 14 comprising a height h₂ by means of which there is enabled a constant distance of a cooking product 15 to be treated by heat from the base 11 of the receptacle 8. Said inner spacers 11 which can resemble an arbitrary wave form with peaks and troughs are formed as an integral part of the base 11. In an embodiment not part of the invention they can be formed as a separate element that can be inserted, together with the cooking product 15 to be treated by heat, into the receptacle 8 or removed therefrom.

Said receptacle 8 is formed at its end being spaced from the base 11 and cooperating with the second cover 9 with a groove 16 which extends over the entire circumference of said receptacle. Furthermore, it is provided for according to the present invention that said second cover 9 is formed at its free boundary area 17 cooperating with the receptacle 8 and, respectively, with said groove 16, with at least one cut-out 18, preferably with a plurality of cut-outs 18. Said cut-outs 18 are arranged over the circumference of the boundary area 17 either in equal or arbitrary mutual distances. Preferably, the height h₃ of each cut-out 18 is smaller than the depth of said groove 16.

A process of heat treatment of the cooking product in the receiving device according to the present invention is carried out in the following manner. The receptacle 8 with the cooking product 15 to be treated by heat is placed in the container 1 arranged on the heating device 4. The cooking product 15 is placed on said plurality of the inner spacers 14 and spaced from the base 11 of the receptacle 8, in order for the cooking product does not come into contact with liquid that might drip from the cooking product 15 during heat treatment. The base of said receptacle 8 is arranged by means of said at least one outer spacer 13 in the distance h₁ drom the base 2 of the container 1. Liquid, preferably water is poured into said container 1 up to the height h₄ which is smaller than said distance h₁, so that between the liquid level and the base 11 of the receptacle 8 there is always provided sufficient space for steam circulation. Afterwards, liquid, preferably water is filled into said groove 16 on the receptacle 8, and the latter is closed and, respectively, covered by means of said second cover 9. Here, said cut-outs 18 in the second cover 9 are entirely submerged in said liquid in the groove 16. Finally, the container 1 is closed by means of the first cover 6.

Delivering heat energy from the heating device 4 the liquid in the container 1 evaporates, thus, an environment with wet steam is created inside the container 1 surrounding the receptacle 8. Said wet steam entirely surrounds the receptacle 8 emitting heat energy to the cooking product 15 to be treated by heat placed in the receptacle 8. As a rule, due to warming up said cooking product 15 secrets juices that pool in the base 11 of the receptacle 8, and as a result pressure of evaporated juices of the cooking product 15 may increase. The pressure inside the receptacle 8 increased in this manner pushes excess steam through the liquid in the groove 16 and through said cut-outs 18 in the second cover 9 into the container 1. When the pressure of wet steam in the container 1 increases beyond acceptable degree, said increased pressure lifts the first cover 6 of the container 1 and the excessive wet steam escapes into surrounding, resulting in a pressure drop inside the container 1.

## Claims

1. A receiving device for a cooking product to be treated by heat, preferably by means of steam, comprising a container with a base in which a receptacle for a cooking product to be treated by heat is arranged in said container spaced from said base, and a cover of said container, wherein said receptacle (8) for a cooking product to be treated by heat comprises a base (11) which is provided at the outer side thereof with at least one outer spacer (13), **characterized in that** it is provided at the inner side thereof with at least one inner spacer (14), said inner spacers (14) formed as integral part of the base (11), and a cover (9), wherein said receptacle (8) is formed at its end which cooperates with the cover (9) over the entire circumference with a groove (16) which is configured to receive liquid, wherein said cover (9) comprises a boundary area (17) which cooperates with the groove (16).

2. A receiving device according to claim 1, ***characterized in that*** said outer spacers (13) comprising a height (h₁) enable constant space of the receptacle (8) from the base (2) of a container (1).

3. A receiving device according to claims 1 to 2, ***characterized in that*** said inner spacers (14) comprising a height (h₂) enable constant space of a cooking product (15) to be treated by heat from the base (11) of the receptacle (8).

4. A receiving device according to claim 1, ***characterized in that*** said inner spacers (14) resemble an arbitrary wave form with peaks and troughs.

5. A receiving device according to any claim 1 to 4, ***characterized in that*** the boundary area (17) of the cover (9) is formed with at least one cut-out (18) the height (h₃) thereof is smaller than the depth of said groove (16).

## Patentansprüche

1. Aufnahmevorrichtung für ein durch Wärme, vorzugsweise mittels Dampf, zu behandelndes Kochprodukt, umfassend einen Behälter mit einer Basis, wobei ein Gefäß für ein durch Wärme zu behandelndes Kochprodukt in dem Behälter von der Basis beabstandet angeordnet ist, und einen Deckel für den Behälter, wobei das Gefäß (8) für ein durch Wärme zu behandelndes Kochprodukt eine Basis (11) umfasst, welche an seiner Außenseite mit wenigstens einem äußeren Abstandhalter (13) versehen ist, **dadurch gekennzeichnet, dass** es an seiner Innenseite mit wenigstens einem inneren Abstandhalter (14) versehen ist, wobei die inneren Abstandhalter (14) als integraler Teil der Basis (11) ausgebildet sind, und mit einem Deckel (9), wobei das Gefäß (8) an seinem mit dem Deckel (9) zusammenwirkenden Ende über den gesamten Umfang mit einer Rille (16) ausgebildet ist, die zur Flüssigkeitsaufnahme konfiguriert ist, wobei der Deckel (9) einen Randbereich (17) umfasst, der mit der Rille (16) zusammenwirkt.

2. Aufnahmevorrichtung nach Anspruch 1, ***dadurch gekennzeichnet, dass*** die äußeren Abstandhalter (13), die eine Höhe (h₁) aufweisen, einen konstanten Abstand des Gefäßes (8) von der Basis (2) des Behälters (1) ermöglichen.

3. Aufnahmevorrichtung nach einem der Ansprüche 1 bis 2, ***dadurch gekennzeichnet, dass*** die inneren Abstandhalter (14), die eine Höhe (h₂) aufweisen, einen konstanten Abstand eines durch Wärme zu behandelnden Kochprodukts (15) von der Basis (11) des Gefäßes (8) ermöglichen.

4. Aufnahmevorrichtung nach Anspruch 1, ***dadurch gekennzeichnet, dass*** die inneren Abstandhalter (14) einer beliebigen Wellenform mit Spitzen und Tälern ähneln.

5. Aufnahmevorrichtung nach einem der Ansprüche 1 bis 4, ***dadurch gekennzeichnet, dass*** der Randbereich (17) des Deckels (9) mit wenigstens einem Ausschnitt (18) versehen ist, dessen Höhe (h₃) kleiner ist als die Tiefe der Rille (16).

## Revendications

1. Dispositif de réception pour un produit de cuisson à traiter par de la chaleur, de préférence au moyen de vapeur, comprenant un contenant avec une base dans laquelle un récipient pour un produit de cuisson à traiter par de la chaleur est disposé dans ledit contenant espacé de ladite base, et un couvercle dudit contenant, ledit récipient (8) pour un produit de cuisson à traiter par de la chaleur comprenant une base (11) qui comporte, à son côté externe, au moins un élément d'espacement externe (13), **caractérisé par le fait qu'**il comporte, à son côté interne, au moins un élément d'espacement interne (14), lesdits éléments d'espacement internes (14) étant formés en tant que partie intégrante de la base (11), et un couvercle (9), ledit récipient (8) étant formé à son extrémité qui coopère avec le couvercle (9) sur toute la circonférence avec une rainure (16) qui est configurée pour recevoir du liquide, ledit couvercle (9) comprenant une zone de limite (17) qui coopère avec la rainure (16).

2. Dispositif de réception selon la revendication 1, **caractérisé par le fait que** lesdits éléments d'espacement externes (13) comprenant une hauteur (h₁) permettent un espace constant du récipient (8) par rapport à la base (2) d'un contenant (1).

3. Dispositif de réception selon les revendications 1 et 2, **caractérisé par le fait que** lesdits éléments d'espacement internes (14) comprenant une hauteur (h₂) permettent un espace constant d'un produit de cuisson (15) à traiter par de la chaleur par rapport à la base (11) du récipient (8).

4. Dispositif de réception selon la revendication 1, **caractérisé par le fait que** lesdits éléments d'espacement internes (14) ressemblent à une forme d'onde arbitraire avec des pics et des creux.

5. Dispositif de réception selon l'une quelconque des revendications 1 à 4, **caractérisé par le fait que** la zone de limite (17) du couvercle (9) est formée avec au moins une découpe (18) dont la hauteur (h₃) est plus petite que la profondeur de ladite rainure (16).
